# EUROPEAN PATENT APPLICATION

(11) **EP 1 752 547 A1**
(43) Date of publication of application: **14.02.2007**
(21) Application number: 06100878.5
(22) Date of filing: 26.01.2006
(51) Int. Cl.: C21D 7/00, B23P 9/00, B24B 39/00, C21D 7/04, B23P 6/04

(54) **Crack-propagation preventing structure, method for preventing crack propagation, crack propagation preventing apparatus, and method for producing skin panel for aircraft**

(30) Priority: 09.08.2005 JP 2005230586
(71) Applicant: MITSUBISHI HEAVY INDUSTRIES, LTD., Tokyo 108-8215 (JP)
(72) Inventor: NISHIMURA, Toshihiko, MITSUBISHI HEAVY IND. LTD, Minato-ku, Nagoya, 455-8515, Aichi-ken (JP)
(74) Representative: Henkel, Feiler & Hänzel

(57) **Abstract**

A crack-propagation preventing structure that can suppress or prevent the propagation of cracks (2) that would be generated in a metal component (1) or that have been generated in a metal component (1) is provided. The crack-propagation preventing structure includes a point dimple (4) formed by pressing a rigid sphere (3) of a rigid body at an appropriate position on the surface of a metal component, which is subjected to crack-propagation prevention processing.

## Description

### BACKGROUND OF THE INVENTION

### 1. Field of the Invention

The present invention relates to a crack-propagation preventing structure for suppressing or preventing the propagation of cracks generated in metal components, a method for preventing crack propagation, a crack-propagation preventing apparatus, and a method for producing a skin panel for aircraft.

This application is based on Japanese Patent Application No. 2005-230586, the content of which is incorporated herein by reference.

### 2. Description of the Related Art

Hitherto, the following techniques are known for suppressing or preventing the propagation of cracks generated in metal components.

In a first technique, a drill hole that is called "a stop hole" is formed at the leading tip of a crack generated in a metal component. To form such a stop hole, a mandrel having a diameter slightly larger than that of the stop hole may be inserted and retracted, thereby performing cold working on the inner wall.

A second technique is called "burnishing". In this technique, a steel ball is rolled on the surface of a metal component while being lightly pressed with a machine tool. Thus, any irregularities on the surface are planarized, and a compressive residual stress is imparted to improve the fatigue strength (refer to U. S. Patent No. 5,826,453).

A third technique is called "a stress wave". A dimple is formed on the surface of a metal component by strongly pressing an indenter whose leading end has a flat or curved surface. Subsequently, a hole having a diameter smaller than that of the dimple is drilled at the center of the dimple. A compressive residual stress is imparted by cold working, and thus the fatigue strength of the periphery of the hole or a notch such as the bottom surface of a gear is improved (refer to U. S. Patent No. 6,389,865 B1 and U. S. Patent Application No. 2002/0148270 A1) .

However, the above known techniques have the following problems.

In the first stop hole technique, a new crack is generated from the edge of the hole at an early stage and the length of a crack increases immediately by an amount equal to the diameter of the hole. Because of these problems, this technique does not provide a significant advantage from the viewpoint of preventing crack propagation. The cold working performed on the inner surface of the hole is advantageous in suppressing or preventing crack generation. However, the cold working does not sufficiently suppress or prevent the propagation of cracks that have been already generated. In addition, the cold working process is complex.

The second burnishing technique is advantageous in suppressing or preventing crack generation, but this technique also does not prevent the propagation of cracks that have been already generated. Also, this technique cannot be applied to the repair in the field.

The third stress wave technique is also advantageous in suppressing or preventing crack generation, but this technique is not fundamentally aimed at preventing the propagation of cracks that have been already generated. Furthermore, this technique can be applied only to holes and notches, thus this cannot be applied to other parts that do not include holes or notches.

As described above, the known techniques do not provide a satisfactory effect to prevent crack propagation. Accordingly, for example, in the fuselage of an aircraft, the condition of cracks must be checked by periodic inspections. In other words, when crack propagation is not satisfactorily prevented, the periodic inspection must be performed more frequently, resulting in increased maintenance costs. Therefore, it is desirable to develop a technique that is effective in preventing crack propagation.

### BRIEF SUMMARY OF THE INVENTION

The present invention has been made in view of the above situation, and it is an object of the present invention to provide a crack-propagation preventing structure that is capable of suppressing or preventing the propagation of cracks that would be generated in a metal component or that have been generated in a metal component, a method for preventing crack propagation, a crack-propagation preventing apparatus, and a method for producing a skin panel for an aircraft.

In order to solve the above problems, the present invention provides the following solutions.

A crack-propagation preventing structure of the present invention includes a dimple formed by pressing a rigid body at an appropriate position on the surface of a metal component, which is subjected to crack-propagation prevention processing.

According to the crack-propagation preventing structure described above, by forming a dimple at an appropriate position on the surface of a metal component, plastic deformation is occurred in the dimple and a compressive residual stress is induced in the dimple and the vicinity area. Accordingly, when the dimple is formed in the propagation path of a crack, the crack must pass through the plastic deformation area, and is subjected to the induced compressive residual stress. Thus, the crack propagation can be suppressed or prevented by forming the dimple simply by plastic deformation processing without increasing the weight. In this case, preferred examples of the rigid body include a sphere and a roller.

In the crack-propagation preventing structure, the dimple is preferably disposed at at least one position in the form of a point. In this case, the dimple is provided at an important position so that the crack passes through a local plastic deformation area and is subjected to an induced compressive residual stress.

In the crack-propagation preventing structure, the dimple is preferably disposed in the form of a continuous line. In this case, the continuous linear dimple can form a plastic deformation area and a compressive residual stress area that cover a wide area.

A method for preventing crack propagation according to the present invention includes forming a dimple by pressing a rigid body at an appropriate position on the surface of a metal component, which is subjected to crack-propagation prevention processing.

According to the method for preventing crack propagation, by forming a dimple by pressing with a rigid body at an appropriate position on the surface of a metal component, which is subjected to crack-propagation prevention processing, a plastic deformation is occurred in the dimple and a compressive residual stress is induced in the dimple and the vicinity area. Accordingly, when the dimple is formed in the propagation path of a crack, the crack must pass through the plastic deformation area and is subjected to the induced compressive residual stress. Thus, the crack propagation can be suppressed or prevented without increasing the weight.

In the method for preventing crack propagation, the dimple is preferably formed in the form of a point or in the form of a line. In this case, a plastic deformation area and a compressive residual stress area that are disposed locally or that cover a wide area can be formed.

In the method for preventing crack propagation, the dimple is preferably formed in the vicinity of crack tip generated on the surface of the metal component. This is suitable for the case when a crack is found during a periodic inspection or the like, and is possible to minimize the number of dimples at important positions.

In the method for preventing crack propagation, preferably, the dimple is formed on an extension of the crack or a pair of the dimples are formed so as to sandwich the extension of the crack. In the former case, the crack passes through a plastic deformation area, and is subjected to the compressive residual stress induced by the dimple. In the later case, the crack passes through an induced compressive residual stress area disposed between the dimples.

According to a crack-propagation preventing apparatus of the present invention, in a crack-propagation preventing apparatus for forming a dimple by pressing a rigid body at an appropriate position on the surface of a metal component, which is subjected to crack-propagation prevention processing, the apparatus includes an indenter part serving as the rigid body that is pressed on the surface of the metal component to apply a compressive load, a control part that detects the magnitude of the applied compressive load and that adjusts the compressive load, and a load-generating part for pressing the indenter part on the surface of the metal component.

According to the crack-propagation preventing apparatus described above, the apparatus includes the indenter part serving as the rigid body that is pressed on the surface of the metal component to apply a compressive load, the control part that detects the magnitude of the applied compressive load and that adjusts the compressive load, and the load-generating part for pressing the indenter part on the surface of the metal component. Accordingly, the load-generating part outputs a compressive load that is adjusted by the control part and the indenter part is pressed on the surface of the metal component with a desired compressive force, thereby forming a dimple.

A method for producing a skin panel for an aircraft of the present invention includes forming a dimple by pressing a rigid body at an appropriate position on the surface of an aircraft skin panel, which is subjected to crack-propagation prevention processing.

According to the method for producing a skin panel for an aircraft, by forming a dimple by pressing with a rigid body at an appropriate position on the surface of an aircraft skin panel, which is subjected to crack-propagation prevention processing, a plastic deformation is occurred in the dimple and a compressive residual stress is induced in the dimple and the vicinity area. Accordingly, when the dimple is formed in the propagation path of a crack, the crack must pass through the plastic deformation area and is subjected to the induced compressive residual stress. Thus, the crack propagation can be suppressed or prevented without increasing the weight.

According to the present invention, by forming a dimple at an appropriate position on the surface of a metal component, a plastic deformation is occurred in the dimple and a compressive residual stress is induced in the dimple and the vicinity area. Therefore, when a dimple is provided near the propagation path of a crack, the crack passes through the plastic deformation area or the induced compressive residual stress area. In the plastic deformation area, the material is dented and stretched material due to dent induces the compressive residual stress, and decreases the opening of the crack. In the compressive residual stress area, a stress is applied in the direction that prevents crack propagation, thus suppressing or preventing crack propagation. Therefore, crack propagation can be suppressed or prevented by the dimple that is formed simply by plastic deformation processing without increasing the weight. Consequently, for example, when the present invention is applied to a fuselage of an aircraft, the interval of periodic inspections for cracks can be set longer than that used in the past because the propagation of cracks can be prevented. Therefore, the present invention can provide a significant advantage in reducing maintenance costs.

When the present invention is applied to a newly produced metal component or the like, in which the positions where cracks are generated cannot be determined, dimples are disposed so as to cover a wide area. In such a case, a plastic deformation area and a compressive residual stress area are definitely present in the propagation direction of a crack generated after commencing use, and thus the propagation of undetermined crack in a newly produced component can be prevented.

When the present invention is applied to an existing metal component or the like, in which positions where cracks are generated can be determined, dimples are disposed at appropriate positions on the propagation path. Therefore, the propagation of the cracks can be reliably prevented by forming the minimum number of dimples.

### BRIEF DESCRIPTION OF THE SEVERAL VIEWS OF THE DRAWINGS

Fig. 1A is a plan view showing a crack-propagation preventing structure and a method for preventing crack propagation according to a first embodiment of the present invention.
Fig. 1B is a cross-sectional view of Fig. 1A.
Fig. 2A is a plan view showing a crack-propagation preventing structure and a method for preventing crack propagation according to a second embodiment of the present invention.
Fig. 2B is a cross-sectional view of Fig. 2A.
Fig. 3 is a perspective view showing a part of a body serving as a structural example of an aircraft fuselage.
Fig. 4 is a plan view showing a crack-propagation preventing structure and a method for preventing crack propagation according to a third embodiment of the present invention.
Fig. 5 is a plan view showing a crack-propagation preventing structure and a method for preventing crack propagation according to a fourth embodiment of the present invention.
Fig. 6 is a plan view showing a crack-propagation preventing structure and a method for preventing crack propagation according to a fifth embodiment of the present invention.
Fig. 7 is a plan view showing a crack-propagation preventing structure and a method for preventing crack propagation according to a sixth embodiment of the present invention.
Fig. 8 is a graph showing the relationship between the dimple diameter d and the load F applied to a rigid sphere.
Fig. 9A is a plan view showing an example in which a point dimple is provided on the extension of a crack.
Fig. 9B is a cross-sectional view of Fig. 9A.
Fig. 10A is a plan view showing an example in which point dimples are provided so as to sandwich the extension of a crack.
Fig. 10B is a cross-sectional view of Fig. 10A.
Fig. 11 is a graph showing experimental results of the comparison of propagation of a crack length a due to a repeated stress when the dimple diameter is varied.
Fig. 12 is a graph showing experimental results of the comparison of propagation of a crack length a due to a repeated stress when point dimples are provided on the extension of a crack and when point dimples are provided so as to sandwich the extension of a crack.
Fig. 13 is a front view showing a crack-propagation preventing apparatus according to an embodiment of the present invention.
Fig. 14 is a front view showing a first modification of the apparatus in Fig. 13.
Fig. 15A is a front view showing a second modification of the apparatus in Fig. 13.
Fig. 15B is a side view of Fig. 15A.
Fig. 16A is a front view showing a third modification of the apparatus in Fig. 13.
Fig. 16B is a top view of Fig. 16A.
Fig. 17A is a front view showing a fourth modification of the apparatus in Fig. 13.
Fig. 17B is a top view of Fig. 17A.

### DETAILED DESCRIPTION OF THE INVENTION

Embodiments of a crack-propagation preventing structure and a method for preventing crack propagation according to the present invention will now be described with reference to the drawings.

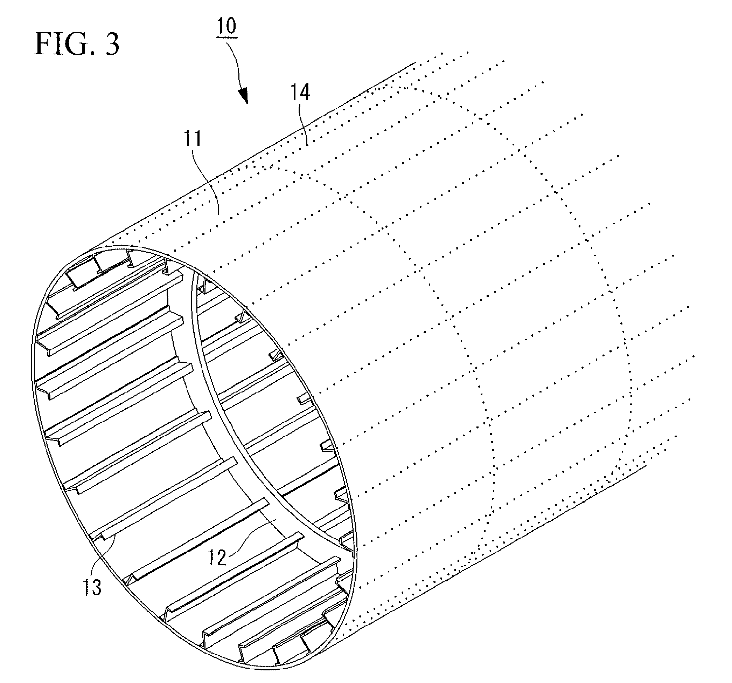

Fig. 3 shows a fuselage structure of an aircraft, which is generally called "a skin-stringer structure", as an example of the application of a crack-propagation preventing structure. The example in the figure shows a body 10 of the aircraft. In the body 10, a skin panel 11 composed of an aluminum alloy is joined to the outside of a skeleton component including frames 12 and stringers 13 with rivets 14. The skeleton component is formed by arranging skeleton members, i.e., the frames 12 and the stringers 13, composed of an aluminum alloy in a grid shape.

Cracks are generated in the body 10 having the above structure by repeated load, etc. Periodic inspection is performed at intervals that are determined so that the size of the cracks does not exceed a predetermined value.

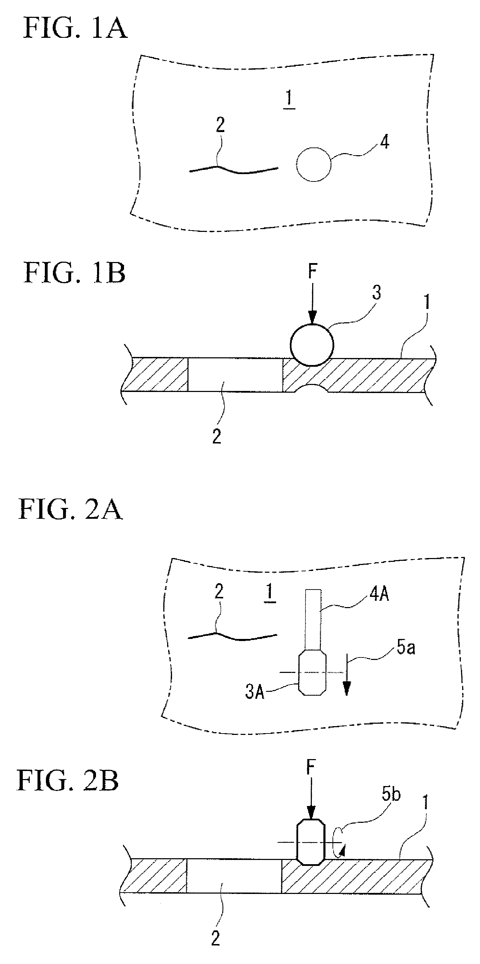

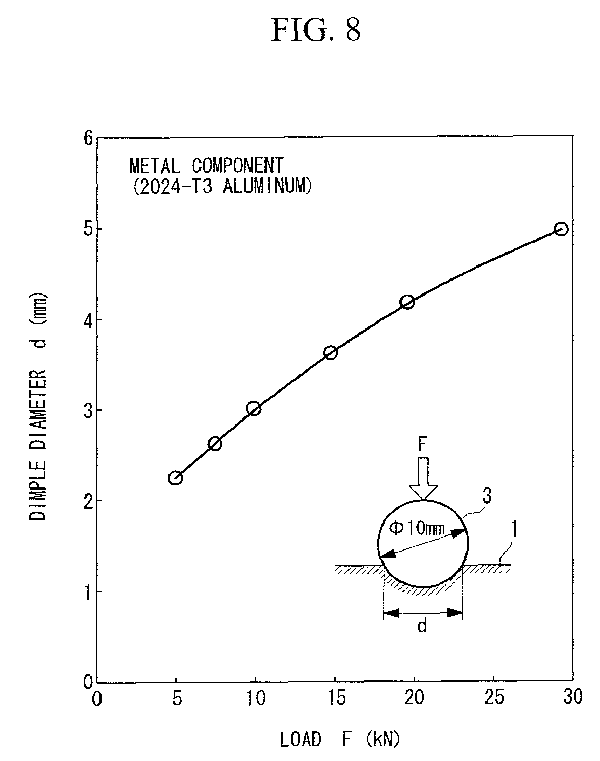

A first embodiment of a crack-propagation preventing structure shown in Figs. 1A and 1B suppresses or prevents the propagation of a crack 2 generated in a metal component 1, such as the above-described skin panel 11. In this structure, an appropriate position on the surface of the metal component 1, which is subjected to crack-propagation prevention processing, is pressed under a load F with a rigid sphere 3 serving as a rigid body. Thereby, a point dimple 4 is provided so that the surface of the metal component 1 is dented substantially in the form of a hemisphere. This point dimple 4, which is formed by a local plastic deformation of the metal component 1, is appropriately provided near the tip of the crack 2, since the crack usually linearly propagates. Fig. 8 shows an example of the relationship between the dimple diameter d and the load F applied to the rigid sphere 3. As shown in Fig. 8, as the load F increases, the dimple diameter d due to the plastic deformation also increases.

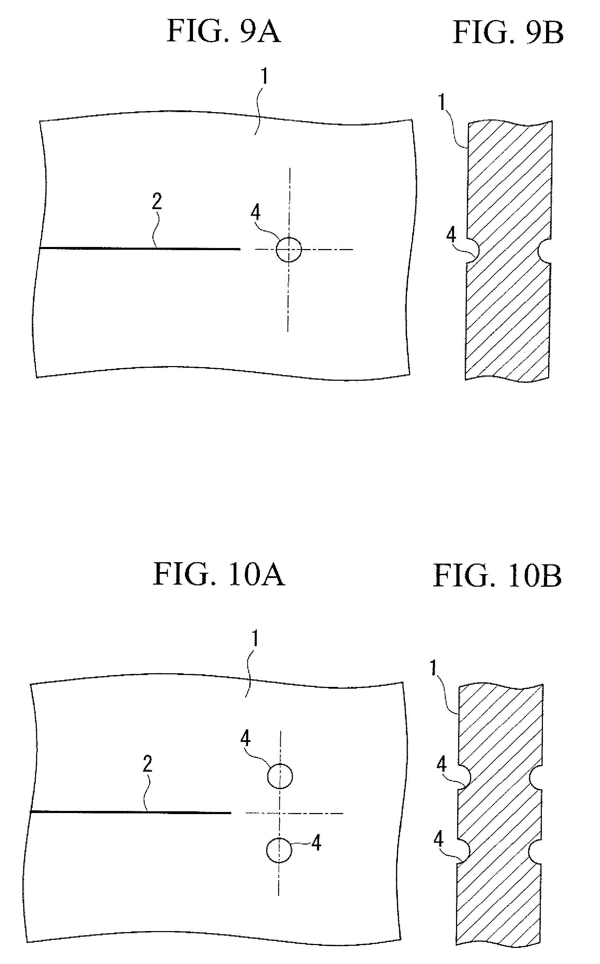

Regarding a preferred arrangement of the point dimple 4, for example, as shown in Figs. 9A and 9B, at least one point dimple 4 may be disposed on the extension of the propagation direction of the crack 2. Alternatively, as shown in Figs. 10A and 10B, a pair of point dimples 4 may be disposed so as to sandwich the extension of the crack 2. Although not shown in the figure, any combination of one point dimple and a pair of point dimples 4 are possible, and there is no restriction on the number of dimples.

According to this crack-propagation preventing structure, the point dimples 4 are formed at appropriate positions on the surface of the metal component 1; therefore, a plastic deformation is occurred in the point dimples 4 and a compressive residual stress is induced in the dimple and the vicinity area by compression with the rigid sphere 3. Accordingly, when the point dimples 4 are provided on the propagation path of the crack 2 or in the vicinity of the leading tip of the crack 2, the crack 2 must pass through the plastic deformation area or the compressive residual stress area to propagate and increase in size. In the plastic deformation area, the stretched material due to dent induces a compressive residual stress and decreases the opening of the crack 2. In addition, in a compressive residual stress area, the crack is subjected to the negative stress which is opposite to the tensile stress accelerating the propagation of the crack 2. Consequently, the crack 2 does not easily propagate in these areas.

Therefore, when the point dimples 4, which are formed simply by plastic deformation processing without increasing the weight, are provided at appropriate positions, a crack-propagation preventing structure for suppressing or preventing the propagation of the crack 2 can be provided. For example, by forming the minimum number of point dimples 4 at appropriate positions in the vicinity of the crack 2 that is found during a periodic inspection or the like, the local plastic deformation area and the compressive residual stress area are formed at important positions. Thus, a crack-propagation preventing method that is effective in suppressing or preventing the propagation of cracks is provided.

In a second embodiment of a crack-propagation preventing structure shown in Figs. 2A and 2B, instead of the point dimple 4 formed using the rigid sphere 3, a continuous linear dimple 4A is formed using a roller 3A as a rigid body. In this case, when the roller 3A is pressed at an appropriate position in the vicinity of a crack 2 and is moved in the direction shown by the arrow 5a, the linear dimple 4A is formed while the roller 3A is rotated as shown by the arrow 5b. For example, as shown in Fig. 2A, the linear dimple 4A is formed so as to intersect the extension of the propagation direction of the crack 2.

In this crack-propagation preventing structure, the linear dimple 4A, which is formed simply by plastic deformation processing without increasing the weight, is provided on the extension of the crack 2. Consequently, the plastic deformation is occurred in the linear dimple, and the compressive residual stress is induced in the dimple and the vicinity area, and thus the propagation of the crack 2 can be suppressed or prevented. Therefore, for example, by forming the linear dimple 4A on the extension of the crack 2 that is found during a periodic inspection or the like, a crack-propagation preventing method that is effective in suppressing or preventing the propagation of cracks is provided in which an area that intersects the linear dimple 4A is large.

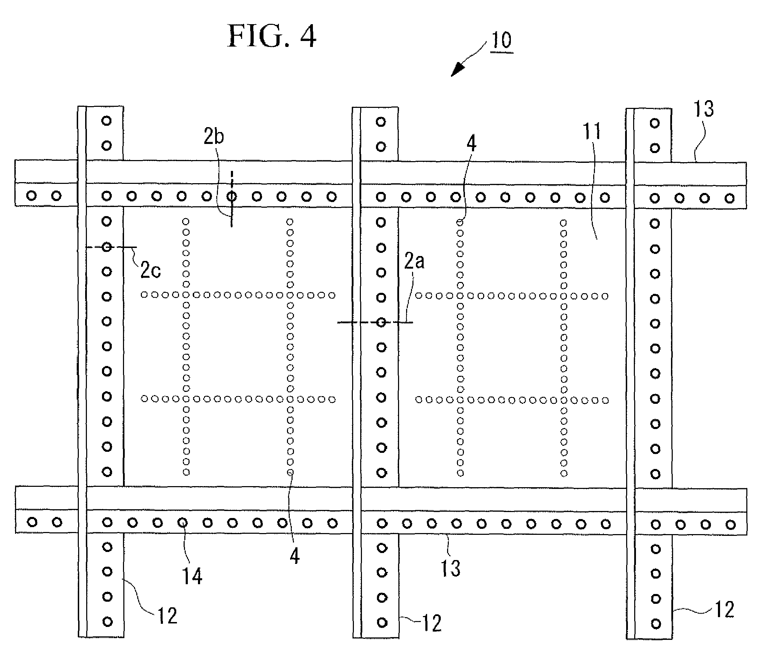

The above crack-propagation preventing structures and the methods for preventing crack propagation of the present invention are effective not only in preventing crack propagation after the crack 2 that has been generated in an existing body 10 is found but also in preventing the propagation of a crack 2 that would be generated in a newly produced body 10. In the case of such a newly produced body 10, since the positions where cracks 2 are generated or the propagation directions of the cracks 2 cannot be determined, dimples that will be described below on the basis of Figs. 4 to 7 should be formed.

According to a third embodiment shown in Fig. 4, in a newly produced body 10 having a rivet structure, point dimples 4 are formed in advance at appropriate positions of a skin panel 11. In this case, on the skin panel 11, which is surrounded by frames 12 and stringers 13, a large number of point dimples 4 are arranged with a predetermined pitch in the directions parallel to the frames 12 and the stringers 13. In the example shown in the figure, the point dimples 4 are linearly arranged from one end to the other end so as to form two lines in each of the horizontal direction and the vertical direction in a grid, but the arrangement is not limited thereto.

By forming such point dimples 4 in advance, the propagation of a crack 2 that is generated at an unpredictable position after commencing use can be minimized.

Specifically, for example, when cracks 2a and 2c are generated in the direction perpendicular to the frames 12 and the cracks 2a and 2c propagate, since a large number of the point dimples 4 are arranged on the extensions in the direction parallel to the frames 12, when the cracks 2a and 2c reach a plastic deformation area of the point dimples 4 or a compressive residual stress area formed between the point dimples 4, the propagation of the cracks 2a and 2c can be prevented.

On the other hand, when a crack 2b is generated in the direction perpendicular to the stringers 13 and the crack 2b propagates, since a large number of the point dimples 4 are arranged on the extension in the direction parallel to the stringers 13, when the crack 2b reaches a plastic deformation area of the point dimples 4 or a compressive residual stress area formed between the point dimples 4, the propagation of the crack 2b can be prevented.

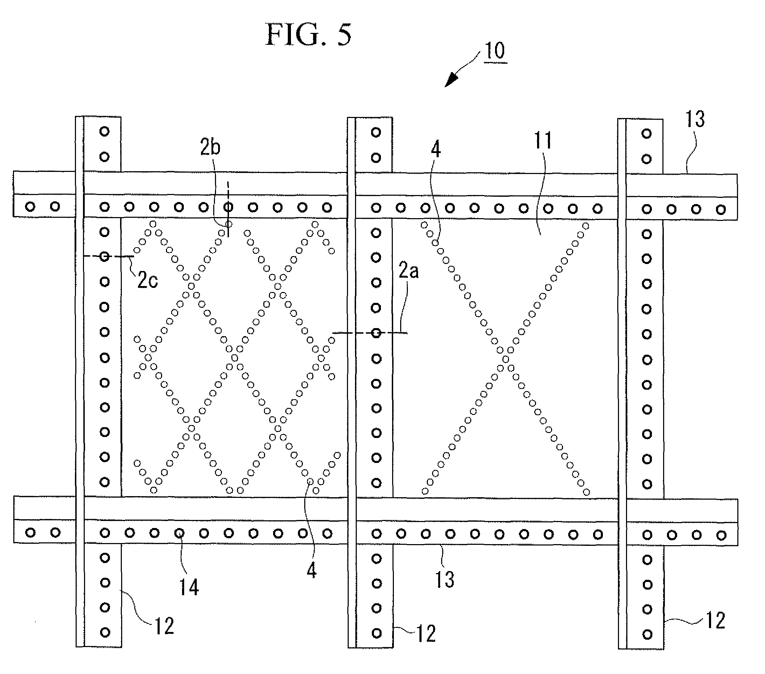

According to a fourth embodiment shown in Fig. 5, point dimples 4 are formed in advance at appropriate positions of a skin panel 11, as in the third embodiment. However, for example, as shown in the right side of the figure, the point dimples 4 in this case are arranged in the form of oblique lines connecting the opposing corners of the grid formed by connecting the frames 12 and the stringers 13. Alternatively, as shown in the left side of the figure, on the skin panel 11 surrounded by the frames 12 and the stringers 13, the point dimples 4 may be arranged in two or more lines in directions substantially parallel to the diagonal lines of the grid.

By forming such point dimples 4 in advance, the propagation of a crack 2 that is generated at an unpredictable position after commencing use can be minimized, as in the third embodiment.

Specifically, for example, when cracks 2a and 2c are generated in the direction perpendicular to the frames 12 or when a crack 2b is generated in the direction perpendicular to the stringers 13, and the cracks 2a, 2b, and 2c propagate, since a large number of the point dimples 4 are definitely present on the extensions of those cracks, when the cracks 2a, 2b, and 2c reach a plastic deformation area of the point dimples 4 or a compressive residual stress area formed between the point dimples 4, the propagation of any of the cracks 2a, 2b, and 2c can be prevented.

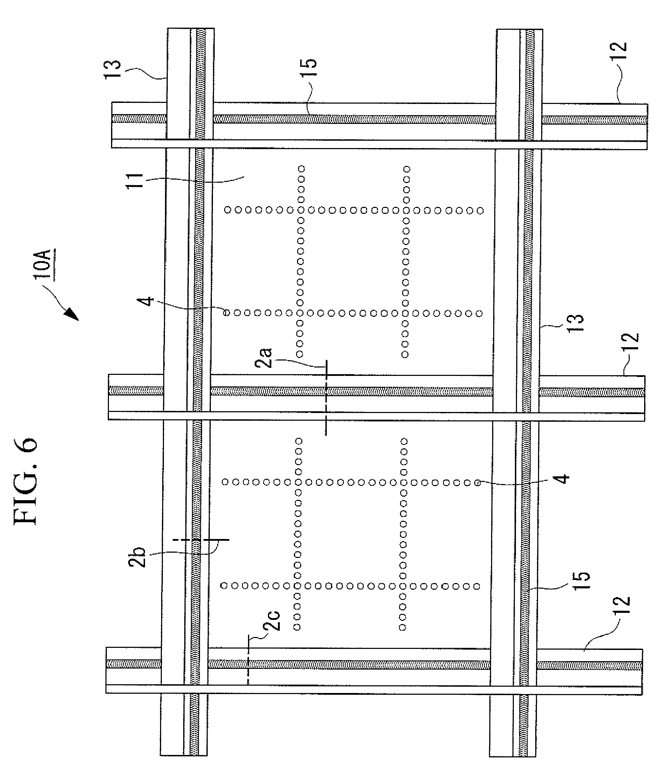

A fifth embodiment in Fig. 6 shows an example in which the present invention is applied to a newly produced body 10A formed by joining with welded parts 15. In the body 10A, point dimples 4 are formed in advance at appropriate positions on a skin panel 11, as in the above third embodiment. In this case, on the skin panel 11 surrounded by frames 12 and stringers 13, a large number of point dimples 4 are arranged with a predetermined pitch in the directions parallel to the frames 12 and the stringers 13.

This structure can also minimize the propagation of a crack 2 that is generated at an unpredictable position after commencing use, as in the third embodiment.

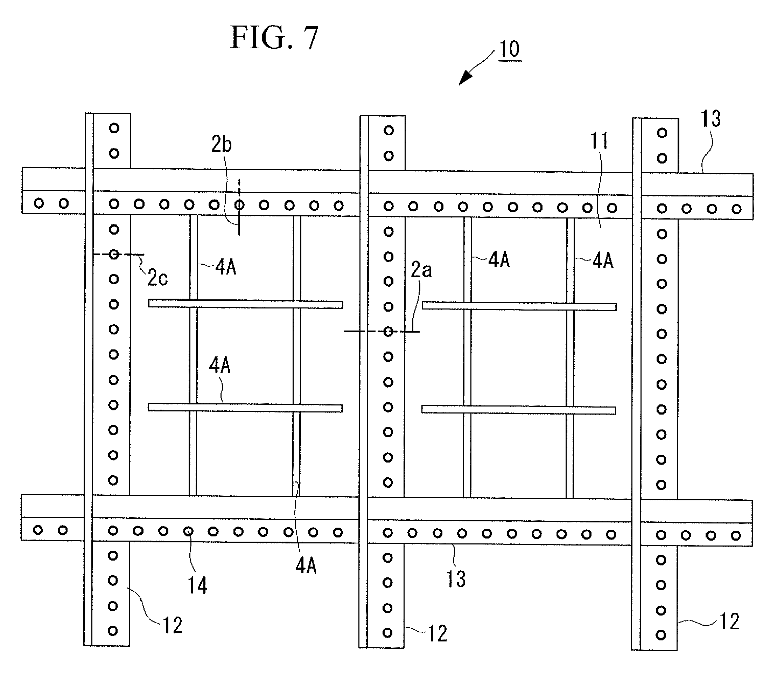

According to a sixth embodiment shown in Fig. 7, in a newly produced body 10 having a rivet structure, linear dimples 4A are formed in advance at appropriate positions of a skin panel 11. In this case, on the skin panel 11 surrounded by frames 12 and stringers 13, the linear dimples 4A are linearly formed in the directions parallel to the frames 12 and the stringers 13. In the example shown in the figure, the linear dimples 4A are arranged at predetermined intervals from one end to the other end so as to form two lines in each of the horizontal direction and the vertical direction in a grid, but the arrangement is not limited thereto.

By forming such linear dimples 4A in advance, the propagation of a crack 2 that is generated at an unpredictable position after commencing use can be minimized.

Specifically, for example, when cracks 2a and 2c are generated in the direction perpendicular to the frames 12 and the cracks 2a and 2c propagate, since the linear dimples 4A are provided on the extensions in the direction parallel to the frames 12, when the cracks 2a and 2c reach a plastic deformation area or a compressive residual stress area of the linear dimples 4A, the propagation of the cracks 2a and 2c can be prevented.

On the other hand, when a crack 2b is generated in the direction perpendicular to the stringers 13 and the crack 2b propagates, since the linear dimple 4A is provided on the extension of the crack 2b in the direction parallel to the stringers 13, when the crack 2b reaches a plastic deformation area or a compressive residual stress area of the linear dimple 4A, the propagation of the crack 2b can be prevented.

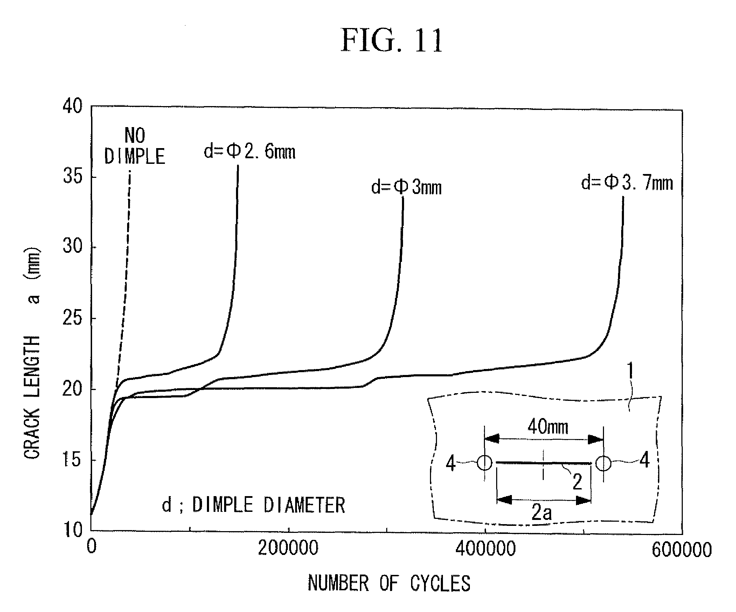

The relationship between the diameter of the above-described point dimple 4 (dimple diameter d) and the propagation of a crack length a will now be described with reference to Fig. 11, which shows experimental results for various dimple diameters d. As shown in Fig. 8, the dimple diameter d can be adjusted by varying the load F applied to the rigid sphere 3. In other words, when the load F is applied to a metal component 1 composed of a predetermined material (2024-T3 aluminum is used in the experiment) with the rigid sphere 3 having a predetermined diameter (10 mm in the experiment), as the value of the load F increases, the dimple diameter d also increases.

According to the experimental results shown in Fig. 11, as the dimple diameter d increases, the number of cycles required for breaking the metal component 1 increases, and thus the propagation of a crack 2 is prevented and the lifetime of the metal component 1 is extended. The reason for this is as follows: When a large load F is applied in the formation of the point dimple 4, a large dent is formed and a large stretched material induces the large compressive residual stress, and decreases the opening of the crack. In Fig. 11, the breaking of the metal component 1 is defined as a point where the curve showing the crack length a rises sharply in the vertical direction.

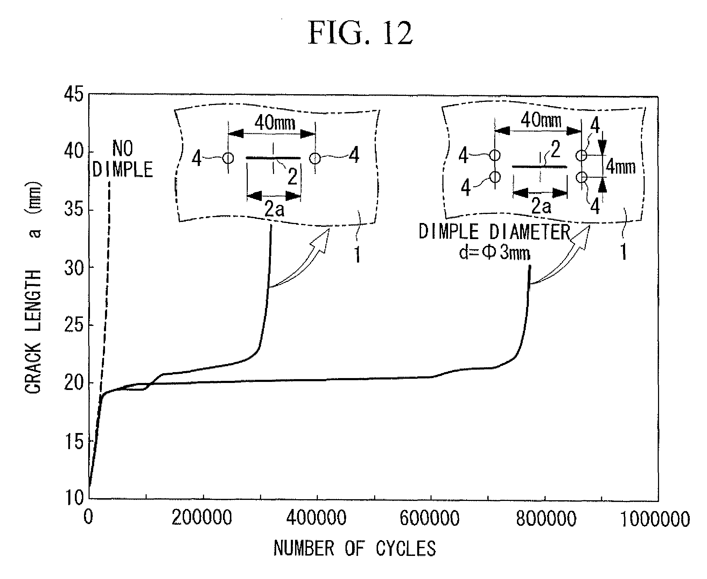

Next, the arrangement of the above point dimples 4 will now be described with reference to Fig. 12, which shows experimental results on the relationship between the crack length a and the number of cycles of the repeated load f. The figure shows a comparison between the arrangement in Figs. 9A and 9B, in which the point dimples 4 are arranged on the extension of a crack 2, and the arrangement in Figs. 10A and 10B, in which the point dimples 4 are arranged so as to sandwich the extension of a crack 2.

In the experiment shown in Fig. 12, the point dimple 4 having a dimple diameter d of 3 mm was used. The distance between the point dimples 4 that sandwich the extension of the crack 2 was 4 mm. The result shows that the arrangement in which two point dimples 4 are disposed so as to sandwich the extension of the crack 2 has a lifetime longer than that of the arrangement in which the point dimple 4 is disposed on the extension of the crack 2. The reason for this is that the propagation path of the crack 2 receives larger compression residual stress from both side dimples of the path than that of the dimple on the crack path, because the distance between the both side dimples 4 is sufficiently small.

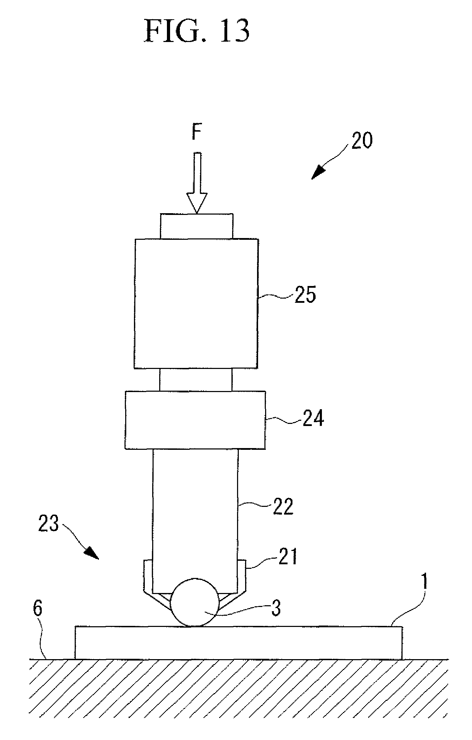

Embodiments of a crack-propagation preventing apparatus for forming the point dimple 4 or the linear dimple 4A on the surface of a metal component 1 will now be described with reference to Figs. 13 to 17B.

A crack-propagation preventing apparatus 20 shown in Fig. 13 presses an appropriate position on the surface of a metal component 1, which is subjected to crack-propagation prevention processing, with a rigid sphere 3 serving as a rigid body to form a point dimple 4. The crack-propagation preventing apparatus 20 includes an indenter part 23 serving as a rigid body, a load cell 24, and an actuator 25. The rigid body is pressed onto the surface of the metal component 1, which is disposed on a surface plate 6, to apply a compressive load. The load cell 24 serves as a control part that detects the magnitude of the compressive load to adjust the load. The actuator 25 serves as a load-generating part for pressing the indenter part 23 on the surface of the metal component 1. In this case, the indenter part 23 includes a rigid sphere 3, a rigid-sphere holding part 21 that prevents the rigid sphere 3 from falling, and a holder 22. The holder 22 fixes and supports the rigid-sphere holding part 21, and the upper end of the holder 22 is connected to the load cell 24.

According to the crack-propagation preventing apparatus 20, when the actuator 25 operates to output a compressive load F, the compressive load F presses the rigid sphere 3 on the surface of the metal component 1 via the load cell 24 and the indenter part 23. In this step, the apparatus outputs to the actuator 25 a control signal for adjusting the magnitude of the compressive load F detected by the load cell 24 to a predetermined value. As a result, the actuator 25 serving as the load-generating part outputs a predetermined compressive load F that is adjusted by the control part. The rigid sphere 3 provided on the indenter part 23 is then pressed onto the surface of the metal component 1 with a desired compressive force. Thus, the point dimple 4 having a desired diameter d can be easily formed.

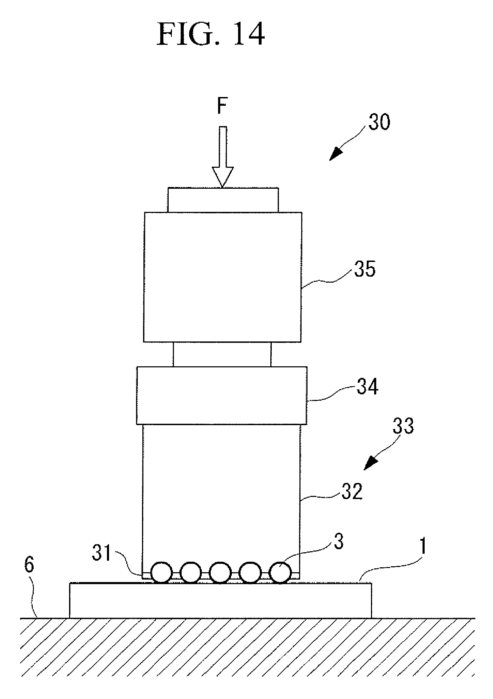

A crack-propagation preventing apparatus 30 shown in Fig. 14, which is a first modification, simultaneously presses appropriate positions on the surface of a metal component 1 disposed on a surface plate 6 with a plurality of rigid spheres 3 to simultaneously form a plurality of point dimples 4 that are arranged at predetermined intervals. The crack-propagation preventing apparatus 30 includes an indenter part 33 serving as a rigid body, a load cell 34, and an actuator 35. The rigid body is pressed onto the surface of the metal component 1 to apply a compressive load. The load cell 34 detects the magnitude of the compressive load to adjust the load. The actuator 35 is used for pressing the indenter part 33 on the surface of the metal component 1. In this case, the indenter part 33 includes a plurality of rigid spheres 3, a rigid-sphere holding part 31 that prevents these rigid spheres 3 from falling, and a holder 32. The holder 32 fixes and supports the rigid-sphere holding part 31, and the upper end of the holder 32 is connected to the load cell 34.

According to the crack-propagation preventing apparatus 30, when the actuator 35 operates to output a compressive load F, the compressive load F presses the plurality of rigid spheres 3 on the surface of the metal component 1 via the load cell 34 and the indenter part 33. As a result, the actuator 35 outputs a predetermined compressive load F that is adjusted by the control part. The plurality of rigid spheres 3 provided on the pressing part 33 are then pressed onto the surface of the metal component 1 with a desired compressive force. Thus, the point dimples 4 having a desired diameter d can be simultaneously formed at a predetermined interval.

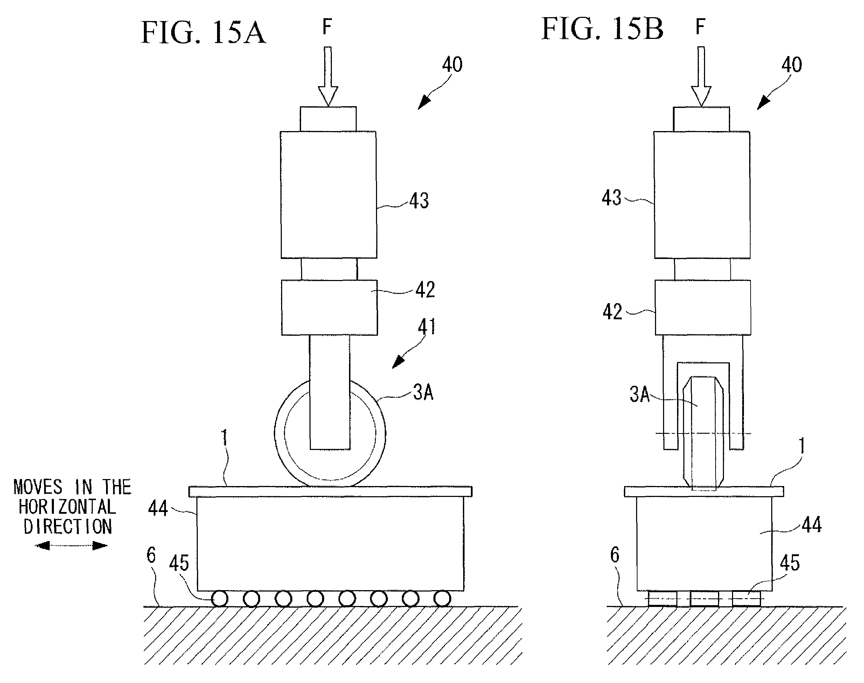

A crack-propagation preventing apparatus 40 shown in Figs. 15A and 15B, which is the second modification, presses an appropriate position on the surface of a metal component 1 with a roller 3A to form a linear dimple 4A. The crack-propagation preventing apparatus 40 includes an indenter part 41 serving as a rigid body, a load cell 42, and an actuator 43. The rigid body is pressed onto the surface of the metal component 1 to apply a compressive load. The load cell 42 detects the magnitude of the compressive load to adjust the load. The actuator 43 is used for pressing the indenter part 41 on the surface of the metal component 1. In this case, the indenter part 41 allows free rotation of the roller 3A and the upper end of the indenter part 41 is connected to the load cell 42.

In the figure, the metal component 1 is disposed on a moving stage 44. Roller members 45 are disposed between a surface plate 6 and the moving stage 44, and the metal component 1 moves together with the moving stage 44.

According to the crack-propagation preventing apparatus 40, when the actuator 43 operates to output a compressive load F, the compressive load F presses the roller 3A on the surface of the metal component 1 via the load cell 42 and the indenter part 41. As a result, the actuator 43 outputs a predetermined compressive load F that is adjusted by the control part. The roller 3A provided on the indenter part 41 is then pressed onto the surface of the metal component 1 with a desired compressive force. Thus, the linear dimple 4A can be formed on the metal component 1, which moves on the surface plate 6 together with the moving stage 44.

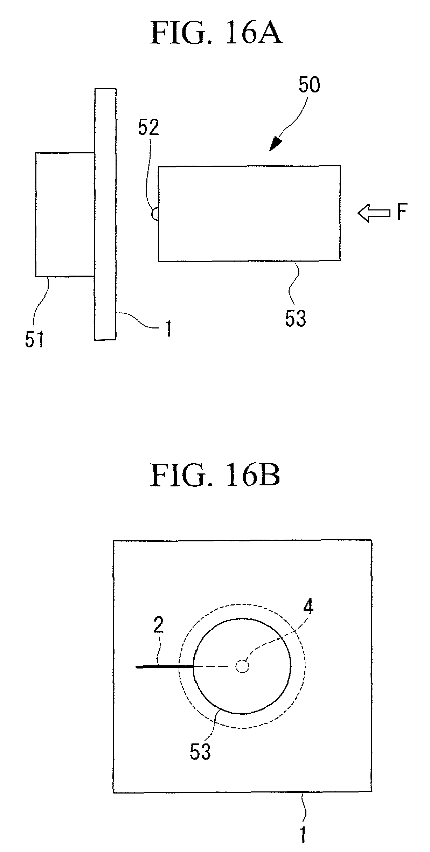

A crack-propagation preventing apparatus 50 shown in Figs. 16A and 16B, which is a thirdmodification, presses an appropriate position on the surface of a metal component 1 with an indenter bar 53 having a substantially hemispherical indenter 52 at the leading end to form a point dimple 4. This crack-propagation preventing apparatus 50 is advantageous in that a crack 2 generated in an existing body 10 can be easily repaired on site. The crack-propagation preventing apparatus 50 includes only a support block 51 disposed on the back-side of the metal component 1 and the indenter bar 53. In this case, the dimensions of the protrusion of the substantially hemispherical indenter 52 of the indenter bar 53 are determined by adding the depth of the point dimple 4 to a margin corresponding to recovery of the plastic deformation.

According to the crack-propagation preventing apparatus 50, the support block 51 is placed on the back-side of the metal component 1 and the indenter bar 53 is then hit with a hammer or the like. The resulting impact load F presses the indenter 52 via the indenter bar 53 on the surface of the metal component 1. When the indenter 52 reaches a predetermined depth, the entire surface of the indenter bar 53 hits the surface of the metal component 1 and the indenter 52 is no longer pressed onto the surface of the metal component 1. The diameter of the indenter bar 53 is set so as to be sufficiently larger than the diameter of the indenter 52. Thereby, the pressure applied on the surface of the metal component 1 is decreased according to the reciprocal of the area ratio. Consequently, a desired point dimple 4 can be formed without denting the surface of the metal component 1 with the indenter part 53.

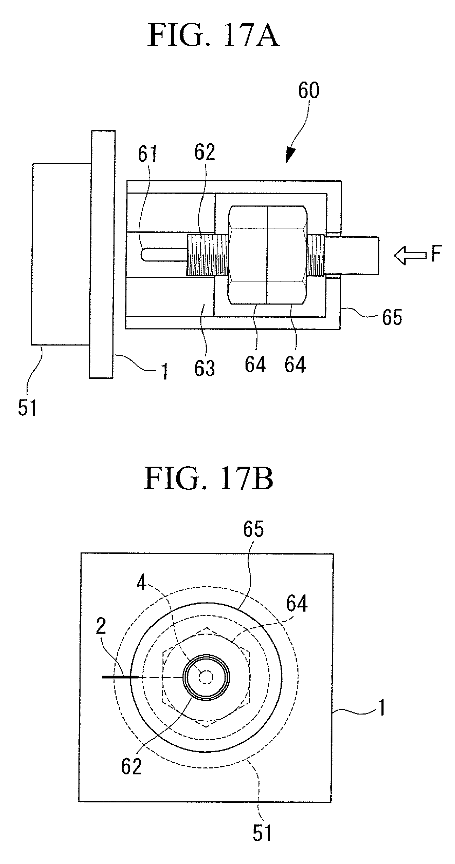

In a crack-propagation preventing apparatus 60 shown in Figs. 17A and 17B, which is the fourth modification, a dimple is formed by manually hitting a part of the apparatus with an impact hammer or the like, as in the apparatus in Figs. 16A and 16B. When the indenter bar is gripped directly with the hand, a large impact is applied to the hand. Therefore, in this apparatus, the indenter bar is installed in a case 65 to reduce the impact. This crack-propagation preventing apparatus 60 includes a support block 51 that is disposed on the back-side of a metal component 1, an indenter bar 62, a holder 63, double nuts 64, and the case 65.

The size of the dimple is controlled by fixing the double nuts 64 on the indenter bar 62 at a position that provides a desired dimple depth. The double nuts 64 are used in order to vary the dimple depth arbitrarily. Alternatively, when the depth is fixed in use, the indenter bar 62 and the double nuts 64 may be integrally formed.

When the depth of the point dimple 4 reaches a predetermined value, the double nuts 64 and the holder 63 are hit, thus dispersing the impact force F. Consequently, a point dimple 4 having a predetermined depth (size) can be formed without denting the metal component 1. The outer diameter of the holder 63 is set so as to be sufficiently larger than the diameter of the indenter 61. This structure prevents the surface of the metal component 1 from being dented by an excessive impact pressure.

In the examples shown in the figures, the leading end of the indenter substantially has a hemispheric shape, but the shape is not limited thereto.

As described above, according to the present invention, by forming point or linear dimples at appropriate positions on the surface of a metal component 1, plastic deformation is occurred in the dimple, and compressive residual stress is induced in the dimples and the vicinity area . When the dimple is disposed on the propagation path of a crack 2, the crack 2 must pass through the plastic deformation area and is subjected to the induced compressive residual stress. In the plastic deformation area, the metal is dented and stretched material induces the compressive residual stress. The compressive residual stress is applied to the metal in the direction that prevents the propagation, and decreases the opening of the crack 2, thus the propagation of the crack 2 can be suppressed or prevented.

As a result, the propagation of the crack 2 can be suppressed or prevented by forming a point dimple 4 or a linear dimple 4A that is formed simply by plastic deformation processing without increasing the weight. For example, when the present invention is applied to a fuselage of an aircraft, such as a skin panel for an aircraft, the interval of periodic inspections for cracks can be set longer than that used in the past because the propagation of cracks 2 can be prevented.

In addition, when the present invention is applied to a newly produced metal component 1, in which positions where cracks 2 are generated cannot be determined, an arrangement of point dimples 4 or linear dimples 4A is provided so as to cover a wide area. In such a case, a plastic deformation area and a compressive residual stress area are definitely present in the propagation direction of a crack 2 generated after commencing use, and thus the propagation of the crack 2 can be prevented.

When the present invention is applied to an existing metal component 1, in which positions where cracks 2 are generated can be determined, a local plastic deformation formed by point dimples 4 or linear dimples 4A disposed at appropriate positions induces a compressive residual stress on the crack propagation path. Therefore, the propagation of the cracks 2 can be reliably prevented by forming a small number of dimples.

The point dimples 4 and the linear dimples 4A may be used in combination depending on the conditions, such as the positions of the dimples to be formed.

The present invention is not limited to the above embodiments and may be appropriately modified without departing from the spirit and the scope thereof. For example, the application of the present invention is not limited to the fuselage structure of an aircraft.

## Claims

1. A crack-propagation preventing structure comprising:
a dimple formed by pressing a rigid body at an appropriate position on the surface of a metal component, which is subjected to crack-propagation prevention processing.

2. The crack-propagation preventing structure according to claim 1, wherein the dimple is disposed at at least one position in the form of a point.

3. The crack-propagation preventing structure according to claim 1, wherein the dimple is disposed in the form of a continuous line.

4. A method for preventing crack propagation comprising forming a dimple by pressing a rigid body at an appropriate position on the surface of a metal component, which is subjected to crack-propagation prevention processing.

5. The method for preventing crack propagation according to claim 4, wherein the dimple is formed in the form of a point or in the form of a line.

6. The method for preventing crack propagation according to claim 4, wherein the dimple is formed near the tip of a crack generated on the surface of the metal component.

7. The method for preventing crack propagation according to claim 6, wherein the dimple is formed on an extension of the crack or a pair of the dimples are formed so as to sandwich the extension.

8. A crack-propagation preventing apparatus for forming a dimple by pressing a rigid body at an appropriate position on the surface of a metal component, which is subjected to crack-propagation prevention processing, the apparatus comprising:
an indenter part serving as the rigid body that is pressed on the surface of the metal component to apply a compressive load;
a control part that detects the magnitude of the compressive load and that adjusts the compressive load; and
a load-generating part for pressing the indenter part on the surface of the metal component.

9. A method for producing a skin panel for an aircraft, comprising forming a dimple by pressing a rigid body at an appropriate position on the surface of an aircraft skin panel, which is subjected to crack-propagation prevention processing.
